# EUROPEAN PATENT APPLICATION

(11) **EP 3 438 211 A1**
(43) Date of publication of application: **06.02.2019**
(21) Application number: 17774768.0
(22) Date of filing: 24.03.2017
(51) Int. Cl.: C09D 11/322, B41J 2/01, B41M 5/00, B42D 25/378, G07D 7/128

(54) **INKJET INK, INK SET, INK CARTRIDGE, INKJET DEVICE, AND RECORD**

(30) Priority: 30.03.2016 JP 2016067514
(71) Applicant: Seiko Epson Corporation, Tokyo 160-8801 (JP)
(72) Inventor: WATANABE Shotaro, Suwa-shi Nagano 392-8502 (JP); SONOYAMA Takuya, Suwa-shi Nagano 392-8502 (JP)
(74) Representative: Miller Sturt Kenyon
(86) International application number: PCT/JP2017/012033
(87) International publication number: WO 2017/170231

(57) **Abstract**

There is provided recorded matter including a printed image which can be detected without using ultraviolet light. There is also provided an ink for liquid droplet discharge, an ink set, an ink cartridge, and a liquid droplet discharging apparatus which can be suitably used for producing the recorded matter.

An ink for liquid droplet discharge of the invention includes particles formed of a material that emits upconversion light. It is preferable that an average particle diameter of the particles be 10 nm or more and 200 nm or less. It is preferable that a content of the particles in the ink for liquid droplet discharge be 0.1% by mass or more and 20% by mass or less. It is preferable that the ink for liquid droplet discharge be colorless. It is preferable that the particles be formed of a material containing an inorganic substance.

## Description

### Technical Field

The present invention relates to an ink for liquid droplet discharge, an ink set, an ink cartridge, a liquid droplet discharging apparatus, and recorded matter.

### Background Art

Printed matter in which a printed image cannot be visually recognized under normal states, but can be detected under irradiation with ultraviolet light is known (for example, see PTL 1). This technique is used for the purpose of enhancing security.

However, in this technique, since irradiation is performed with the ultraviolet light for detecting the printed image, there was a problem that the printed matter deteriorates. In addition, there is a concern that ultraviolet light with which the irradiation is performed for detecting the printed image may adversely affect a human body.

### Citation List

### Patent Literature

PTL 1: Japanese Unexamined Patent Application Publication No. 2000-141863

### Summary of Invention

### Technical Problem

An object of the invention is to provide recorded matter including a printed image which can be detected without using ultraviolet light. Another object of the invention is to provide an ink for liquid droplet discharge, an ink set, an ink cartridge, and a liquid droplet discharging apparatus which can be suitably used for producing the recorded matter.

### Solution to Problem

This object is achieved by the following aspects of the invention.

According to an aspect of the invention, there is provided an ink for liquid droplet discharge including particles formed of a material that emits upconversion light.

Accordingly, it is possible to provide an ink for liquid droplet discharge which can be suitably used for producing recorded matter including a printed image which can be detected without using ultraviolet light.

In the ink for liquid droplet discharge of the invention, it is preferable that an average particle diameter of the particles be 10 nm or more and 200 nm or less.

Accordingly, it is possible to make the light emission efficiency of the particles more excellent. In addition, it is possible to perform liquid droplet discharge of the ink for liquid droplet discharge more stably over a longer period of time. It is also possible to make a productivity of the recorded matter formed by using the ink for liquid droplet discharge and a stability of production of the recorded matter more excellent. In addition, it is possible to discharge a finer liquid droplet with more excellent positional accuracy (impact accuracy). Therefore, a finer pattern can be suitably formed. In addition, it is possible to more effectively prevent a discharge failure of the liquid droplet from occurring. Therefore, it is possible to make a reliability of recorded matter to be produced using the ink for liquid droplet discharge more excellent.

In the ink for liquid droplet discharge of the invention, it is preferable that a content of the particles in the ink for liquid droplet discharge be 0.1% by mass or more and 20% by mass or less.

Accordingly, while making the dispersion stability of particles in the ink for liquid droplet discharge, the storage stability of the ink for liquid droplet discharge, discharge stability of the ink for liquid droplet discharge, and the like excellent, it is possible to efficiently form a recorded portion having a desired pattern with a relatively small amount of the ink for liquid droplet discharge during producing of the recorded matter.

It is preferable that the ink for liquid droplet discharge of the invention be colorless.

Accordingly, in the recorded matter produced using the ink for liquid droplet discharge, while in a normal state (a state of non-irradiation with the excitation light), effectively preventing the recorded portion formed by using the ink for liquid droplet discharge adversely affecting the function or an appearance of the recorded matter, in a state of irradiation of the excitation light, it is possible to sufficiently exert effects obtained by containing the particles. In addition, it is possible to suitably apply the recorded matter produced using the ink for liquid droplet discharge to those requiring high security.

It is preferable that the ink for liquid droplet discharge of the invention be colored.

Accordingly, it is possible to give security even no special processing when creating printing data of the recorded matter.

In the ink for liquid droplet discharge of the invention, it is preferable that the particles be formed of a material containing an inorganic substance.

Accordingly, it is possible to make the storage stability of the ink for liquid droplet discharge more excellent, and it is possible to make a durability and reliability of the recorded matter produced using the ink for liquid droplet discharge more excellent.

In the ink for liquid droplet discharge of the invention, it is preferable that the particles contain a lanthanoid ion-containing inorganic substance.

Accordingly, it is possible to make the light emission efficiency of the particles more excellent.

In the ink for liquid droplet discharge of the invention, it is preferable that the particles contain a transition metal ion-containing inorganic substance.

Accordingly, it is possible to achieve cost reduction of the particles while making the light emission efficiency of the particles sufficient.

In the ink for liquid droplet discharge of the invention, it is preferable that the particles be obtained by surface-modifying base particles including an inorganic substance with at least one selected from the group consisting of a compound having an amino group, a compound having a carboxyl group, and a sugar.

Accordingly, it is possible to perform liquid droplet discharge of the ink for liquid droplet discharge still more stably over a longer period of time. It is also possible to make a productivity of the recorded matter formed by using the ink for liquid droplet discharge and a stability of production of the recorded matter still more excellent. In addition, a further finer pattern can be suitably formed. In addition, it is possible to make a reliability of recorded matter to be produced using the ink for liquid droplet discharge still more excellent. In addition, for example, it is possible to achieve further improvement of light emission efficiency obtained by the particles.

It is preferable that the ink for liquid droplet discharge of the invention further include one or more selected from the group consisting of water, alcohol-based liquid, ketone-based liquid, glycol ether-based liquid, glycol diether liquid, and aromatic liquid, as a dispersion medium having a function of dispersing the particles.

Accordingly, it is possible to make the dispersion stability of the particles in the ink for liquid droplet discharge more excellent. In addition, it is possible to make the discharge stability of the ink for liquid droplet discharge more excellent. Therefore, it is possible to more stably produce the recorded matter, and it is possible to make the reliability of the recorded matter to be produced more excellent. In addition, these solvents can be relatively easily volatilized, in general. Therefore, it is possible to make the productivity of recorded matter more excellent.

It is preferable that the ink for liquid droplet discharge of the invention further include one or more selected from the group consisting of an aqueous or non-aqueous polymer dispersant, a low molecular (surfactant) type dispersant, and an inorganic dispersant, as a dispersant of the particles.

Accordingly, it is possible to perform liquid droplet discharge of the ink for liquid droplet discharge still more stably over a longer period of time. It is also possible to make the productivity of the recorded matter formed by using the ink for liquid droplet discharge and the stability of production of the recorded matter still more excellent. In addition, a further finer pattern can be suitably formed. In addition, it is possible to make a reliability of recorded matter to be produced using the ink for liquid droplet discharge still more excellent. In addition, for example, it is possible to achieve further improvement of light emission efficiency obtained by the particles.

It is preferable that the ink for liquid droplet discharge of the invention be discharged by an ink jet method.

Accordingly, it is possible to make the dispersion stability of the particles in the ink for liquid droplet discharge, the storage stability of the ink for liquid droplet discharge, the discharge stability of the ink for liquid droplet discharge, and the like excellent. Even the recorded portion having a fine pattern can be formed with higher accuracy and it is possible to make the productivity of the recorded matter more excellent.

According to another aspect of the invention, there is provided an ink set including a plurality of kinds of inks, the ink set including
at least one kind of the ink for liquid droplet discharge of the invention.

Accordingly, it is possible to provide an ink set which can be suitably used for producing recorded matter including a printed image which can be detected without using ultraviolet light.

It is preferable that the ink set of the invention further include a first ink containing the particles specifically reacting to a first wavelength and
a second ink containing the particles specifically reacting to a second wavelength different from the first wavelength.

Accordingly, it is possible to make a pattern or color tone of the printed image visible by light emission different, for example, by changing a kind of irradiation light.

It is preferable that the ink set of the invention further include at least one kind of the ink for liquid droplet discharge of the invention and
at least one kind of ink not including the particles.

Accordingly, it is possible to display a printed image having a predetermined pattern, in a state of irradiation with excitation light, and it is also possible to display a printed image having a predetermined pattern (a pattern different from the pattern displayed in the state of irradiation with excitation light) even in a state of non-irradiation with the excitation light.

In addition, in producing of the recorded matter, the recorded portion (printed portion) having a predetermined pattern is formed by superimposing an ink containing particles formed of a material that emits upconversion light (the ink for liquid droplet discharge of the invention) and an ink not containing the particles formed of a material that emits upconversion light, whereby it is possible to make a color tone of the pattern different (changed) between a state of irradiation with excitation light and a state of non-irradiation with the excitation light.

According to still another aspect of the invention, there is provided an ink cartridge which contains the ink for liquid droplet discharge of the invention.

Accordingly, it is possible to provide an ink cartridge which can be suitably used for producing recorded matter including a printed image which can be detected without using ultraviolet light.

According to still another aspect of the invention, there is provided a liquid droplet discharging apparatus that discharges a liquid droplet of the ink for liquid droplet discharge of the invention.

Accordingly, it is possible to provide a liquid droplet discharging apparatus which can be suitably used for producing recorded matter including a printed image which can be detected without using ultraviolet light.

According to still another aspect of the invention, there is provided recorded matter including a recording medium, and a recorded portion including a material containing a solid content of the ink for liquid droplet discharge of the invention.

Accordingly, it is possible to provide recorded matter including a printed image (latent image) which can be detected without using ultraviolet light.

### Brief Description of Drawing

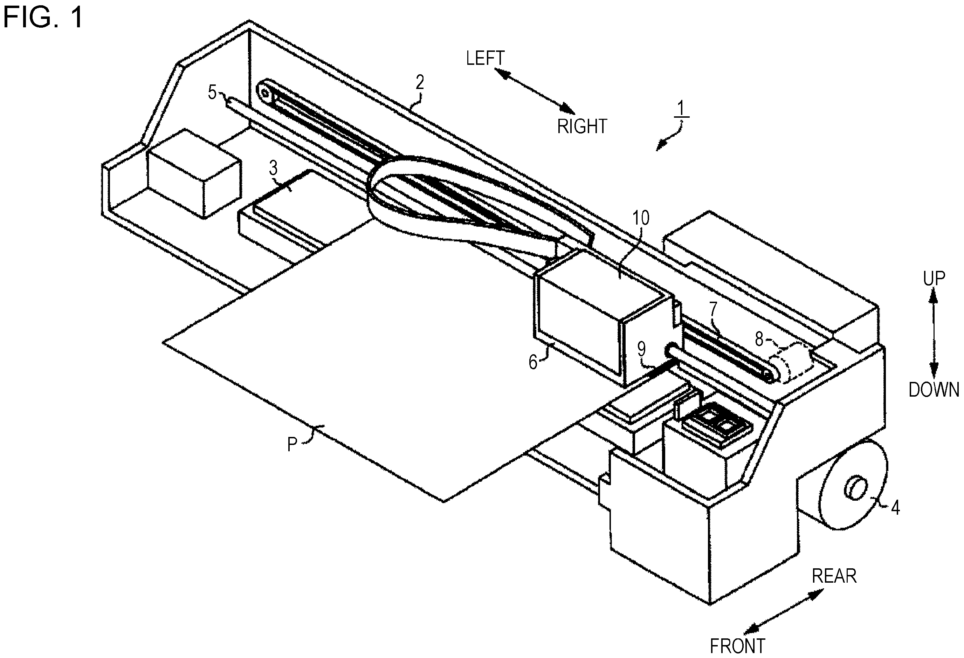

[Fig. 1] Fig. 1 is a perspective view showing a schematic configuration of an example of the liquid droplet discharging apparatus of the invention.

### Description of Embodiments

Hereinafter, preferred embodiments will be described in detail with reference to the accompanying drawings.

### «Ink for Liquid Droplet Discharge»

First, an ink for liquid droplet discharge of the invention will be described.

The ink for liquid droplet discharge of the invention includes particles formed of a material that emits upconversion light.

The particles (upconversion particles) formed of the material that emits upconversion light refer to particles that are excited by absorbing light of a predetermined wavelength and have a function of emitting light (light emission) of a wavelength shorter than the wavelength.

Accordingly, for example, in a case where the particles are irradiated with light of a long wavelength, such as infrared light, it is possible to cause the particles to emit light in a wavelength region of visible light. That is, it is not necessary to perform irradiation with light, having high energy at a short wavelength, such as ultraviolet light.

Therefore, it is possible to effectively prevent a medium (adherend) to which the ink (ink for liquid droplet discharge) is applied or the light emitting material itself from deteriorating due to the excitation light. As a result, it is possible to effectively prevent the recorded matter to be produced using the ink for liquid droplet discharge from unwillingly deteriorating.

In addition, since it is possible to prevent the particles (particles capable of emitting light) itself from deteriorating, it is possible to suitably maintain a light emitting ability over a long period of time.

In addition, the ink for liquid droplet discharge is applied for a liquid droplet discharge method. Therefore, it is possible to suitably cope with the formation of a fine pattern, and in producing a plurality of pieces of recorded matter, it is possible to suitably cope with the formation of the recorded portions having different patterns. Therefore, it is possible to easily impart higher security by forming serial numbers or symbols corresponding thereto, codes, patterns, and the like on the plurality of pieces of recorded matter, as recorded portions.

### <<Particles>>

As above, the ink for liquid droplet discharge of the invention includes particles formed of a material that emits upconversion light.

As long as the particles are excited by absorbing light of a predetermined wavelength and have a function of emitting light (light emission) of a wavelength shorter than the wavelength, any particles may be used. However, it is preferable that the particles satisfy the following conditions.

That is, an average particle diameter of the particles is preferably 10 nm or more and 200 nm or less, and more preferably 15 nm or more and 100 nm or less.

Accordingly, it is possible to make the light emission efficiency of the particles more excellent. In addition, it is possible to make the dispersion stability of the particles in the ink for liquid droplet discharge more excellent, and it is possible to make the discharge stability of the ink for liquid droplet discharge and the storage stability of the ink for liquid droplet discharge more excellent. As a result, it is possible to perform liquid droplet discharge of the ink for liquid droplet discharge more stably over a longer period of time. It is also possible to make a productivity of the recorded matter formed by using the ink for liquid droplet discharge and a stability of production of the recorded matter more excellent. In addition, since the discharge stability improves, it is possible to discharge a finer liquid droplet with more excellent positional accuracy (impact accuracy). Therefore, a finer pattern can be suitably formed. In addition, it is possible to more effectively prevent the discharge failure of the liquid droplet from occurring. Therefore, it is possible to make a reliability of recorded matter to be produced using the ink for liquid droplet discharge more excellent.

In the invention, the average particle diameter refers to an average particle diameter-based on a volume, and can be determined by measuring a dispersion, which is obtained by adding a sample to methanol and dispersing in an ultrasonic disperser for 3 minutes, using a Coulter counter method particle size distribution instrument (for example, TA-II manufactured by COULTER ELECTRONICS INS) with a 50 µm aperture.

A wavelength of light (excitation light) that excites a constituent material of the particle (the material that emits upconversion light) is preferably 750 nm or more and 4000 nm or less, more preferably 760 nm or more and 2500 nm or less, and still more preferably 780 nm or more and 1400 nm or less.

Accordingly, it is possible to make the light emission efficiency of the particles more excellent. In addition, a range of choice of the constituent material of the particle widens. In addition, as a light source for causing particles to emit light, it is possible to suitably use those generally widely used with a low cost and simple configuration.

A peak wavelength of light emission by the particles is preferably 380 nm or more and 750 nm or less, and more preferably 400 nm or more and 730 nm or less.

Accordingly, it is possible to easily visually recognize the light emission by the particles with the naked eye. As a result, for example, applications of the recorded matter produced by using the ink for liquid droplet discharge further widen.

In addition, the particles may be formed of an organic material from the viewpoint of affinity with an organic solvent and nondispersible ink which is difficult to agglomerate and settle, but it is preferable that the particles be formed of a material containing an inorganic substance.

Accordingly, it is possible to make the durability of the particles more excellent. Therefore, it is possible to make the storage stability of the ink for liquid droplet discharge more excellent, and it is possible to make a durability and reliability of the recorded matter produced using the ink for liquid droplet discharge more excellent.

The particles formed of the organic material and the particles formed of the material containing the inorganic substance may be mixed.

Examples of the organic material forming the particles (material that emits upconversion light) include 4-[N-(2-hydroxy ethyl)-N-(methyl)amino phenyl]-4'-(6-hydroxy hexylsulfonyl)stilbene (APSS excitation light wavelength: 962 to 968 nm, light emission color: yellowish green), Rhodamine B (excitation light wavelength: 1054 nm, light emission color: orange red), and Rhodamine 6G (excitation light wavelength: 1054 nm, emission color: red).

Examples of the inorganic substance that forms the particles (an inorganic substance capable of emitting upconversion light) include a lanthanoid ion-containing inorganic substance and a transition metal ion-containing inorganic substance.

Among these, when the particles contain the lanthanoid ion-containing inorganic substance, it is possible to the light emission efficiency of the particles more excellent.

In addition, when the particles contain the transition metal ion-containing inorganic substance, it is possible to achieve cost reduction of the particles while making the light emission efficiency of the particles sufficient.

Examples of the lanthanoid ion-containing inorganic substance capable of emitting upconversion light include Y:Yb:Er-doped NaYF₄ (Y:Yb:Er = 78:20:2, excitation light wavelength: 980 nm, light emission color: green), Y:Yb:Er-doped NaYF₄ (Y:Yb:Er = 69:30:1, excitation light wavelength: 980 nm, light emission color: blue), Y:Yb:Tm-doped NaYF₄ (Y:Yb:Tm = 78:20:2, excitation light wavelength: 980 nm, light emission color: red), and Er³⁺-doped BaCl₂ (excitation light wavelength: 1535 nm, light emission color: green).

In addition, examples of the transition metal ion-containing inorganic substance capable of emitting upconversion light include Ti²⁺-doped MgCl₂ (excitation light wavelength: 1060 to 1075 nm, emission color: reddish violet).

In addition, the particles may be subjected to a surface treatment.

Accordingly, for example, it is possible to make the dispersion stability and the like in the ink for liquid droplet discharge more excellent, and it is possible to make the discharge stability of the ink for liquid droplet discharge and the storage stability of the ink for liquid droplet discharge more excellent. As a result, it is possible to perform liquid droplet discharge of the ink for liquid droplet discharge more stably over a longer period of time. It is also possible to make a productivity of the recorded matter formed by using the ink for liquid droplet discharge and a stability of production of the recorded matter more excellent. In addition, since the discharge stability improves, it is possible to discharge a finer liquid droplet with more excellent positional accuracy (impact accuracy). Therefore, a finer pattern can be suitably formed. In addition, it is possible to more effectively prevent the discharge failure of the liquid droplet from occurring. Therefore, it is possible to make a reliability of recorded matter to be produced using the ink for liquid droplet discharge more excellent. In addition, for example, it is possible to achieve improvement of the light emission efficiency obtained by the particles.

Examples of the compounds that can be used for surface treatment of the particles include a silane compound, a fluorine-based compound, a compound having an amino group, a compound having a carboxyl group, and a sugar. Among these, examples of a preferred compound include a compound having an amino group, a compound having a carboxyl group, and a sugar. In other words, it is preferable that the particles be obtained by surface-modifying base particles including an inorganic substance with at least one selected from the group consisting of a compound having an amino group, a compound having a carboxyl group, and a sugar.

Accordingly, it is possible to make the dispersion stability and the like in the ink for liquid droplet discharge still more excellent, and it is possible to make the discharge stability of the ink for liquid droplet discharge and the storage stability of the ink for liquid droplet discharge still more excellent. As a result, it is possible to perform liquid droplet discharge of the ink for liquid droplet discharge still more stably over a longer period of time. It is also possible to make a productivity of the recorded matter formed by using the ink for liquid droplet discharge and a stability of production of the recorded matter still more excellent. In addition, since the discharge stability improves, it is possible to discharge a finer liquid droplet with still more excellent positional accuracy (impact accuracy). Therefore, a further finer pattern can be suitably formed. In addition, it is possible to still more effectively prevent discharge failure of the liquid droplet from occurring. Therefore, it is possible to make a reliability of recorded matter to be produced using the ink for liquid droplet discharge still more excellent. In addition, for example, it is possible to achieve further improvement of light emission efficiency obtained by the particles.

In addition, the ink for liquid droplet discharge may contain a plurality of kinds of particles having different conditions (such as a shape, a composition, a kind of surface treatment, and a size).

A content of the particles in the ink for liquid droplet discharge is preferably 0.1% by mass or more and 20% by mass or less, and more preferably 0.3% by mass or more and 15% by mass or less.

Accordingly, while making the dispersion stability of particles in the ink for liquid droplet discharge, the storage stability of the ink for liquid droplet discharge, discharge stability of the ink for liquid droplet discharge, and the like excellent, it is possible to efficiently form a recorded portion having a desired pattern with a relatively small amount of the ink for liquid droplet discharge during producing of the recorded matter.

### <<Liquid Component as Dispersion Medium>>

In general, the ink for liquid droplet discharge contains a liquid component having a function as a dispersion medium for dispersing particles in addition to the particles.

Accordingly, it is possible to make the discharge stability of the ink for liquid droplet discharge excellent.

Examples of the liquid component having a function as the dispersion medium include water; (poly)glycol ether-based liquid such as ethylene glycol monomethyl ether, ethylene glycol monoethyl ether, propylene glycol monomethyl ether, and propylene glycol monoethyl ether; (poly)glycol diether-based liquid such as diethylene glycol dimethyl ether, diethylene glycol butyl methyl ether, and tripropylene glycol dimethyl ether; ester-based liquid such as acetate ester such as ethyl acetate, n-propyl acetate, iso-propyl acetate, n-butyl acetate, and iso-butyl acetate; aromatic liquid such as benzene, toluene, xylene, diisopropylbenzene, diphenyl ether, and 3-phenoxytoluene; ketone-based liquid such as methyl ethyl ketone, acetone, methyl isobutyl ketone, ethyl-n-butyl ketone, diisopropyl ketone, and acetylacetone; alcohol-based liquid such as ethanol, propanol, butanol, ethylene glycol, and diethylene glycol; sulfoxide-based liquid such as dimethylsulfoxide and diethylsulfoxide; and heterocyclic compound liquid such as pyridine, picoline, 2,6-lutidine, and benzofuran; and an ionic liquid such as tetraalkylammonium acetate (for example, such as tetrabutylammonium acetate). One or more kinds selected from these can be used in combination. However, it is preferable that the ink for liquid droplet discharge include one or more selected from the group consisting of water, alcohol-based liquid, ketone-based liquid, glycol ether-based liquid, glycol diether liquid, and aromatic liquid, as a dispersion medium.

Accordingly, it is possible to make the dispersion stability of the particles in the ink for liquid droplet discharge more excellent. In addition, it is possible to make the discharge stability of the ink for liquid droplet discharge more excellent. Therefore, it is possible to more stably produce the recorded matter, and it is possible to make the reliability of the recorded matter to be produced more excellent. In addition, these solvents can be relatively easily volatilized, in general. Therefore, it is possible to make the productivity of the recorded matter more excellent.

In a case where the ink for liquid droplet discharge contains particles formed of a metallic material, it is preferable to use an aprotic liquid, as a solvent. Accordingly, it is possible to effectively prevent an unwilling oxidation reaction and the like of the constituent material of the particles.

In addition, as the liquid component having a function as the dispersion medium, for example, a resin material in a molten state, a monomer of a curable resin, a precursor such as a dimer, or the like may be used.

Accordingly, in a producing process of the recorded matter, it is possible to lower a proportion of components to be volatilized. In addition, it is possible to suitably fix the particles with a resin material in the recorded matter, and it is possible to make the durability of the recorded matter more excellent.

A content of the liquid component having a function as the dispersion medium in the ink for liquid droplet discharge is preferably 78% by mass or more and 99.5% by mass or less, and more preferably 82% by mass or more and 99% by mass or less.

Accordingly, while making the dispersion stability of particles in the ink for liquid droplet discharge, the storage stability of the ink for liquid droplet discharge, discharge stability of the ink for liquid droplet discharge, and the like excellent, it is possible to efficiently form a recorded portion having a desired pattern with a relatively small amount of the ink for liquid droplet discharge during producing of the recorded matter.

### <<Other Components>>

The ink for liquid droplet discharge may also contain a component (other components) in addition to the above-described particles and the liquid component as the dispersion medium.

Examples of such a component (other components) include wax, a resin material, a filler, a crosslinking agent, an antioxidant, a plasticizer, a release agent, a polymerization initiator, a dispersant, a surfactant, a thickening agent, an aggregation inhibitor, an antifoaming agent, a slipping agent (leveling agent), a coloring agent, a polymerization inhibitor, a polymerization accelerator, a penetration enhancer, a wetting agent (humectant), a fixing agent, an antifungal agent, a preservative, an ultraviolet light absorber, a chelating agent, and a pH regulator.

In particular, the ink for liquid droplet discharge further may include one or more selected from the group consisting of an aqueous or non-aqueous polymer dispersant, a low molecular (surfactant) type dispersant, and an inorganic dispersant, as a dispersant of the particles.

Accordingly, it is possible to make the dispersion stability and the like in the ink for liquid droplet discharge still more excellent, and it is possible to make the discharge stability of the ink for liquid droplet discharge and the storage stability of the ink for liquid droplet discharge still more excellent. As a result, it is possible to perform liquid droplet discharge of the ink for liquid droplet discharge still more stably over a longer period of time. It is also possible to make a productivity of the recorded matter formed by using the ink for liquid droplet discharge and a stability of production of the recorded matter still more excellent. In addition, since the discharge stability improves, it is possible to discharge a finer liquid droplet with still more excellent positional accuracy (impact accuracy). Therefore, a further finer pattern can be suitably formed. In addition, it is possible to still more effectively prevent discharge failure of the liquid droplet from occurring. Therefore, it is possible to make a reliability of recorded matter to be produced using the ink for liquid droplet discharge still more excellent. In addition, for example, it is possible to achieve further improvement of light emission efficiency obtained by the particles.

Examples of such a dispersant include the followings. That is, examples of the aqueous polymer dispersant include polycarboxylic acid ammonium salt and naphthalenesulfonic acid salt formalin condensation polymer. In addition, examples of the non-aqueous polymer dispersant include polycarboxylic acid alkylamine salts. In addition, examples of the low molecular type dispersant include alkyl sulfonate and quaternary ammonium salt. Examples of the inorganic dispersant include a tripolyphosphate.

A content of other components in the ink for liquid droplet discharge is preferably 5.0% by mass or less, and more preferably 3.0% by mass or less.

Accordingly, while sufficiently exerting the effects obtained by containing these components, it is possible to sufficiently exert the effects obtained by containing the above-described particles and the solvent.

In a state where the particles do not emit light, the ink for liquid droplet discharge may be any color tone, but preferably colorless.

Accordingly, in the recorded matter produced using the ink for liquid droplet discharge, while in a normal state (a state of non-irradiation with the excitation light), effectively preventing the recorded portion formed by using the ink for liquid droplet discharge adversely affecting the function or an appearance of the recorded matter, in a state of irradiation of the excitation light, it is possible to sufficiently exert effects obtained by containing the particles. In addition, in a normal state (a state of non-irradiation with the excitation light), it is difficult for an observer of the recorded matter to recognize a content of the recorded portion or a fact that the recorded portion formed using the ink for liquid droplet discharge is provided. Therefore, it is possible to make the security of the recorded matter more excellent. That is, it is possible to suitably apply the recorded matter produced using the ink for liquid droplet discharge to those requiring high security.

In a state where the particles do not emit light, the ink for liquid droplet discharge may be colored.

For example, a black ink is frequently used in normal printing. Accordingly, it is possible to give security to the recorded matter printed using the black ink containing the particle, even no special processing when creating printing data of the recorded matter. Inks having other color tones (such as red or blue) may also contain the particles.

The ink for liquid droplet discharge may be applied to a liquid droplet discharge method, that is, a method of discharging the ink for liquid droplet discharge as a liquid droplet to form a predetermined pattern, but is preferably discharged by an ink jet method.

Accordingly, it is possible to make the dispersion stability of the particles in the ink for liquid droplet discharge, the storage stability of the ink for liquid droplet discharge, the discharge stability of the ink for liquid droplet discharge, and the like excellent. Even the recorded portion having a fine pattern can be formed with higher accuracy and it is possible to make the productivity of the recorded matter more excellent.

In addition, a viscosity of the ink for liquid droplet discharge is preferably 1 mPa·s or more and 20 mPa·s or less, more preferably 1 mPa·s or more and 10 mPa·s or less. Accordingly, it is possible to make the discharge stability of the ink for liquid droplet discharge particularly excellent, by the liquid droplet discharge method (in particular, the ink jet method). In the present specification, the viscosity refers to a value measured at 25°C using an E type viscometer (for example, VISCONIC ELD manufactured by TOKYO KEIKI INC.).

### <<Ink Set>>

Next, an ink set of the invention will be described.

The ink set of the invention includes a plurality of kinds of ink, and the ink set includes at least one kind of the ink for liquid droplet discharge of the invention described above.

Accordingly, it is possible to provide an ink set which can be suitably used for producing recorded matter including a printed image which can be detected without using ultraviolet light.

In addition, by using a combination of a plurality of kinds of inks, it is possible to widen variations such as color tone and color arrangement of the recorded portion (printed portion) in at least one of a state of non-irradiation with the excitation light and a state of irradiation with excitation light.

Examples of the plurality of inks forming the ink set of the invention include an ink containing different kinds of constituent components, an ink containing constituent components at different ratios, and an ink having different conditions (such as a size or shape) of particles.

As above, the ink set of the invention may include at least one kind of the ink for liquid droplet discharge of the invention. However, it is preferable that the ink set include a plurality of kinds of the ink for liquid droplet discharge of the invention and wavelengths of the excitation light be different from each other in the particles contained in these inks (particles formed of a material that emits upconversion light). In other words, it is preferable that the ink set of the invention include, as the ink for liquid droplet discharge of the invention, a first ink containing the particles (the particles formed of the material that emits upconversion light) specifically reacting to a first wavelength and a second ink containing the particles specifically reacting to a second wavelength different from the first wavelength.

Accordingly, for example, by changing the wavelength of light (irradiation light) for exciting material that emits upconversion light, it is possible to make a plurality of different kinds of printed images visible. More specifically, it is possible to make a pattern or color tone of the printed image visible by light emission different, for example, by changing a kind of irradiation light.

An absolute value of the difference between the first wavelength and the second wavelength is preferably 50 nm or more, and more preferably 100 nm or more.

Accordingly, it is possible to more effectively prevent the light emission of the recorded portion due to one ink from affecting the light emission of the recorded portion due to the other ink, and it is possible to make a plurality of different kinds of printed images more suitably visible.

In addition, the ink set of the invention may further include a third ink containing particles that specifically reacts to a third wavelength different from the first wavelength and the second wavelength (particles formed of a material that emits upconversion light) in addition to the first ink, the second ink as described above.

Accordingly, variations of a color tone, a color arrangement, and the like of the recorded portion (printed portion) can be further widened by whether or not to perform irradiation with excitation light or selecting the wavelength of the excitation light.

Also, one ink may contain the particles specifically reacting to the first wavelength and the particles specifically reacting to a second wavelength different from the first wavelength.

In addition, the ink set of the invention may further include at least one kind of the ink for liquid droplet discharge of the invention and at least one kind of ink not including the particles described above (particles formed of the material that emits upconversion light).

Accordingly, it is possible to display a printed image having a predetermined pattern, in a state of irradiation with excitation light, and it is also possible to display a printed image having a predetermined pattern (a pattern different from the pattern displayed in the state of irradiation with excitation light) even in a state of non-irradiation with the excitation light.

In addition, in producing of the recorded matter, the recorded portion (printed portion) having a predetermined pattern is formed by superimposing an ink containing particles formed of a material that emits upconversion light (the ink for liquid droplet discharge of the invention) and an ink not containing the particles formed of a material that emits upconversion light, whereby it is possible to make a color tone of the pattern different (changed) between a state of irradiation with excitation light and a state of non-irradiation with the excitation light.

### <<Ink Cartridge and Liquid Droplet Discharging Apparatus>>

Next, an ink cartridge and liquid droplet discharging apparatus of the invention will be described.

The ink cartridge of the invention contains the ink for liquid droplet discharge of the invention described above.

Accordingly, it is possible to provide an ink cartridge which can be suitably used for producing recorded matter including a printed image which can be detected without using ultraviolet light.

In addition, a liquid droplet discharging apparatus of the invention discharges a liquid droplet of the ink for liquid droplet discharge of the invention described above.

Accordingly, it is possible to provide a liquid droplet discharging apparatus which can be suitably used for producing recorded matter including a printed image which can be detected without using ultraviolet light.

Next, the ink cartridge and the liquid droplet discharging apparatus of the invention will be described with reference to the accompanying drawing.

Fig. 1 is a perspective view showing a schematic configuration of an example of the liquid droplet discharging apparatus of the invention.

A liquid droplet discharging apparatus 1 includes a frame 2.

A platen 3 is provided in frame 2, and a recording medium P is fed onto platen 3 by the driving of the recording medium transporting motor 4.

In addition, a rod-like guide member 5 is provided in the frame 2 to be parallel to the longitudinal direction of the platen 3.

In the guide member 5, a carriage 6 is supported in a manner capable of reciprocating in an axial direction of the guide member 5.

The carriage 6 is connected to a carriage motor 8 via a timing belt 7 provided in the frame 2.

Then, the carriage 6 is configured to reciprocate along the guide member 5 by the driving of the carriage motor 8.

In the carriage 6, a head 9 is provided and an ink cartridge 10 for supplying the ink for liquid droplet discharge of the invention to the head 9 is detachably arranged.

The ink for liquid droplet discharge in the ink cartridge 10 is supplied from the ink cartridge 10 to the head 9 by drive of a piezoelectric element (not shown) provided in the head 9, and is discharged to the recording medium P transported onto the platen 3 from a plurality of nozzles which are formed on nozzle formation surface of the head 9. Accordingly, it is possible to produce the recorded matter.

In addition, in the liquid droplet discharging apparatus 1, in a case where the amount of the ink for liquid droplet discharge in the ink cartridge 10 decreases or the like, the ink cartridge 10 is exchangeable with another ink cartridge 10.

Although only one ink cartridge is shown in Fig. 1, the liquid droplet discharging apparatus may include a plurality of ink cartridges so as to correspond to a plurality of kinds of inks.

### <<Recorded Matter>>

Next, the recorded matter of the invention will be described.

The recorded matter of the invention is produced on the recording medium by applying the ink for liquid droplet discharge by the liquid droplet discharge method. In other words, the recorded matter of the invention includes a recording medium, and a recorded portion including a material containing a solid content of the ink for liquid droplet discharge of the invention.

Accordingly, it is possible to provide recorded matter including a printed image (latent image) which can be detected without using ultraviolet light.

The recording medium may be anything, and as examples of the constituent material of the recording medium include paper, a plastic material, a metallic material, a ceramics material, wood, and a stone material. One or more of these can be used in combination.

The recorded portion corresponds to the pattern (latent image) which is visible when irradiation is performed with excitation light.

The particles contained in the ink for liquid droplet discharge may have different compositions depending on a chemical reaction in the producing process of the recorded matter.

The recorded portion may contain a component in addition to a solid content of the ink for liquid droplet discharge of the invention. For example, the recorded portion may be formed by using a combination of the ink for liquid droplet discharge of the invention and another ink (ink not containing particles formed of a material that emits upconversion light).

A thickness of the recorded matter is not particularly limited, but preferably 0.1 µm or more and 1000 µm or less, and more preferably 0.2 µm or more and 500 µm or less.

Accordingly, it possible to more effectively prevent the recorded portion from being peeled off to make the durability of the recorded matter more excellent, and it is possible to make the visibility of the printed image (latent image) more excellent when excitation light is used.

In addition, the recorded matter may have a plurality of regions formed by using a plurality of different kinds of inks, as a recorded portion.

Accordingly, the effect obtained by using a plurality of different kinds of inks as described above is exhibited.

The recorded matter of the invention may have other configurations in addition to the recording medium and the recorded portion.

For example, the recorded matter of the invention may have at least one underlayer provided between the recording medium and the recorded portion, or may have a coating layer provided on a surface of the recorded portion (a surface side opposite to the side of the recorded portion facing the recording medium).

The recorded matter of the invention may be applied to any use, and examples thereof include those that require high security, such as money, marketable securities, stamps, checks, credit cards, and contract forms; those that require amusement properties, such as toys and game machines; simulation equipment/device; accessories, clothing/cloth; an optical member and optical equipment; and medical applications such as a bio-sensor, predetermined biological substances, cells (for example, cancer cells), and markers for marking living tissues.

In addition, the recorded matter of the invention may be a wiring board provided with wiring formed using the ink for liquid droplet discharge of the invention. Accordingly, for example, by irradiating the wiring with excitation light, it is possible to easily specify a disconnected portion when an unintentional disconnection occurs in the wiring.

In addition, even in a state where the disconnection does not occur, it is possible to easily determine the state of deterioration of the wiring (the portion likely to be disconnected, the number thereof, and the degree thereof). Therefore, it is possible to exchange the wiring board at a suitable timing, and it is possible to more effectively prevent accidents caused by disconnection from occurring.

Although preferred embodiments of the invention have been described above, the invention is not limited thereto.

For example, in the above-described embodiments, a case where the ink for liquid droplet discharge is discharged by the ink jet method has been mainly described, but the ink for liquid droplet discharge is discharged by another liquid droplet discharge method.

In addition, in the liquid droplet discharging apparatus of the invention, the configuration of each part can be replaced by any configuration exhibiting a similar function, and any configuration can be added.

For example, the liquid droplet discharging apparatus may include a liquid component removing means having a function of removing a volatile liquid component (dispersion medium) from a discharged ink. Accordingly, it is possible to make the productivity of the recorded matter particularly excellent.

In addition, in a case where the ink for liquid droplet discharge contains a curing component (curable resins such uncured and semi-cured curable resins and precursors of curable resins, such as monomers), the liquid droplet discharging apparatus may further include curing means having a function of curing the curing components. Accordingly, it is possible to produce the recorded matter having excellent durability with a good productivity.

Examples of the curing means include an energy ray irradiation means for performing irradiation with an energy ray such as ultraviolet light (an energy ray capable of curing a curing component) and a heating means.

Examples of the liquid component removing means include a heating means and a pressure reducing means for depressurizing the atmosphere.

### Reference Signs List

- 1: liquid droplet discharging apparatus
- 2: frame
- 3: platen
- 4: recording medium transporting motor
- 5: guide member
- 6: carriage
- 7: timing belt
- 8: carriage motor
- 9: head
- 10: ink cartridge
- P: recording medium

## Claims

1. An ink for liquid droplet discharge comprising:
particles formed of a material that emits upconversion light.

2. The ink for liquid droplet discharge according to Claim 1,
wherein an average particle diameter of the particles is 10 nm or more and 200 nm or less.

3. The ink for liquid droplet discharge according to Claim 1 or 2,
wherein a content of the particles in the ink for liquid droplet discharge is 0.1% by mass or more and 20% by mass or less.

4. The ink for liquid droplet discharge according to any one of Claims 1 to 3,
wherein the ink for liquid droplet discharge is colorless.

5. The ink for liquid droplet discharge according to any one of Claims 1 to 3,
wherein the ink for liquid droplet discharge is colored.

6. The ink for liquid droplet discharge according to any one of Claims 1 to 5,
wherein the particles are formed of a material containing an inorganic substance.

7. The ink for liquid droplet discharge according to Claim 6,
wherein the particles contain a lanthanoid ion-containing inorganic substance.

8. The ink for liquid droplet discharge according to Claim 6 or 7,
wherein the particles contain a transition metal ion-containing inorganic substance.

9. The ink for liquid droplet discharge according to any one of Claims 1 to 8,
wherein the particles are obtained by surface-modifying base particles including an inorganic substance with at least one selected from the group consisting of a compound having an amino group, a compound having a carboxyl group, and a sugar.

10. The ink for liquid droplet discharge according to any one of Claims 1 to 9, further comprising:
one or more selected from the group consisting of water, alcohol-based liquid, ketone-based liquid, glycol ether-based liquid, glycol diether liquid, and aromatic liquid, as a dispersion medium having a function of dispersing the particles.

11. The ink for liquid droplet discharge according to any one of Claims 1 to 10, further comprising:
one or more selected from the group consisting of an aqueous or non-aqueous polymer dispersant, a low molecular (surfactant) type dispersant, and an inorganic dispersant, as a dispersant of the particles.

12. The ink for liquid droplet discharge according to any one of Claims 1 to 11,
wherein the ink for liquid droplet discharge is discharged by an ink jet method.

13. An ink set including a plurality of kinds of inks comprising:
at least one kind of the ink for liquid droplet discharge according to any one of Claims 1 to 12.

14. The ink set according to Claim 13, further comprising:
a first ink containing the particles specifically reacting to a first wavelength; and
a second ink containing the particles specifically reacting to a second wavelength different from the first wavelength.

15. The ink set according to Claim 13 or 14, further comprising:
at least one kind of the ink for liquid droplet discharge according to any one of Claims 1 to 10; and
at least one kind of ink not including the particles.

16. An ink cartridge which contains the ink for liquid droplet discharge according to any one of Claims 1 to 12.

17. A liquid droplet discharging apparatus which discharges a liquid droplet of the ink for liquid droplet discharge according to any one of Claims 1 to 12.

18. A recorded matter comprising:
a recording medium; and
a recorded portion including a material containing a solid content of the ink for liquid droplet discharge according to any one of Claims 1 to 12.
